**Europäisches Patentamt**

**European Patent Office**

**Office européen des brevets**

(19)

(11) Veröffentlichungsnummer: **0 329 996 B1**

# EUROPÄISCHE PATENTSCHRIFT

(12)

(45) Veröffentlichungstag der Patentschrift:
18.09.91 Patentblatt 91/38

(51) Int. Cl.$^5$: **G01C 19/64**

(21) Anmeldenummer: **89101841.8**

(22) Anmeldetag: **03.02.89**

(54) **Faserkreisel.**

(30) Priorität: **25.02.88 DE 3805904**

(43) Veröffentlichungstag der Anmeldung:
**30.08.89 Patentblatt 89/35**

(45) Bekanntmachung des Hinweises auf die
Patenterteilung:
**18.09.91 Patentblatt 91/38**

(84) Benannte Vertragsstaaten:
**AT BE CH DE ES FR GB IT LI NL SE**

(56) Entgegenhaltungen:
**US-A- 4 440 498**
**US-A- 4 445 780**
**US-A- 4 479 715**

(73) Patentinhaber: **Messerschmitt-Bölkow-Blohm**
**Gesellschaft mit beschränkter Haftung**
**Robert-Koch-Strasse**
**W-8012 Ottobrunn (DE)**

(72) Erfinder: **Poisel, Hans, Dr.**
**Neustädter Strasse 6**
**W-8060 Dachau (DE)**
Erfinder: **Trommer, Gert, Dr.**
**Conollystrasse 16**
**W-8000 München 40 (DE)**

**Beschreibung**

Die Erfindung betrifft einen Faserkreisel vom Sagnac-Typ mit einer Lichtleitfaserspule sowie einem aus drei optisch gekoppelten Lichtleitern aufgebauten $3 \times 3$-Koppler, wobei ein erster Lichtleiter des $3 \times 3$-Kopplers mit einer optischen Strahlungsquelle und die beiden anderen Lichtleiter des $3 \times 3$-Kopplers an einem Ende mit je einem Ende der Lichtleitfaserspule und am anderen Ende mit je einem Strahlungsdetektor verbunden sind.

Ein Faserkreisel der o.g. Art ist aus der US-PS 4440498 bekannt und zeichnet sich besonders dadurch aus, daß er aufgrund des $3 \times 3$-Kopplers im sogenannten Quadraturpunkt betrieben wird, in welchem die Anordnung ihre größte Empfindlichkeit bei einer Drehwinkelrate $\Omega = 0$ aufweist, im Gegensatz zu früher üblichen Faserkreiseln mit normalen Strahlteiler. Mit gestiegener Empfindlichkeit machen sich jedoch andere Störeinflüsse negativ bemerkbar. So können beispielsweise Fluktuationen der Strahlungsquelle oder auch Veränderungen innerhalb des $3 \times 3$-Kopplers nicht von einem Signal unterschieden werden, das aufgrund von Drehungen des Faserkreisels entsteht.

Es ist daher Aufgabe der Erfindung einen Faserkreisel der o.g. Art zu schaffen, mit der störungsbedingte Veränderungen der Lichtquelle sowie des $3 \times 3$-Kopplers erfaßt und eliminiert werden können. Diese Aufgabe wird durch einen nach den Merkmalen des Patentanspruchs 1 ausgebildeten Faserkreisel gelöst.

Die Erfindung nutzt dabei einen Teil des $3 \times 3$-Kopplers, der bisher ohne Bedeutung war und, wie bei o.g. US-PS 4440498, entweder erst gar nicht als eigener Ausgang vorgesehen ist oder, wie bei der US-PS 4479715, durch spezielle Formgebung des Kopplers bewußt vermieden wird. Durch die Verwendung dieses bisher "unnützen" Ausganges, der erfindungsgemäß mit einem Strahlungsdetektor verbunden wird, lassen sich Intensitätsschwankungen, die durch die Lichtquelle oder den $3 \times 3$-Koppler bewirkt werden erfassen. Dies ist insbesondere dann zur Kompensation derartiger Störungen ausreichend, wenn eine der beiden Störquellen dominiert. Die Einflüsse der beiden Störquellen können zusätzlich noch separiert werden, wenn gemäß Patentanspruch 2 ein weiterer Strahlungsdetektor vorgesehen ist, der die Intensität der Strahlungsquelle erfaßt, bevor die Strahlung durch den $3 \times 3$-Koppler läuft. Derartige Strahlungsdetektoren sind z.B. in Form von sogenannten Monitordioden bekannt. Die Anbringung derartiger Strahlungsdetektoren kann dabei entweder direkt an der Strahlungsquelle erfolgen, wie es beispielsweise bei Halbleiterlasern häufig der Fall ist oder durch Auskopplung von Licht auf der Strecke zwischen der Strahlungsquelle und dem $3 \times 3$-Koppler durch Verwendung eines zusätzlichen $2 \times 2$-Kopplers.

Die durch den $3 \times 3$-Koppler verursachten Störungen setzen sich im wesentlichen aus zwei Komponenten zusammen, die einmal aufgrund von Variationen der Koppellänge und zum anderen aufgrund von Variationen der Koppelsymmetrie verursacht werden ; beides geschieht im wesentlichen durch thermische Effekte. Diese beiden Störquellen können dadurch separiert werden, daß zusätzlich die aus dem $3 \times 3$-Koppler in Richtung Strahlungsquelle zurücklaufende Strahlung detektiert wird.

Die Erfindung wird im wesentlichen anhand der in den Fig. schematisch dargestellten Ausführungsbeispiele näher beschrieben. Es zeigen :

Fig. 1 einen Faserkreisel mit $3 \times 3$-Koppler und zusätzlichem Strahlungsdetektor,

Fig. 2a einen Faserkreisel mit $3 \times 3$-Koppler und zusätzlichem Strahlungsdetektor sowie Monitordiode,

Fig. 2b ein Blockschaltbild zur Signalauswertung eines Faserkreisels gemäß Fig. 2a,

Fig. 3 eine Einrichtung gemäß Fig. 2 mit indirekt gekoppelter Monitordiode,

Fig. 4 einen Faserkreisel mit $3 \times 3$-Koppler und beidseitig angeordneten zusätzlichen Strahlungsdetektoren und

Fig. 5 eine Einrichtung gemäß Fig. 4 mit zusätzlicher Monitordiode.

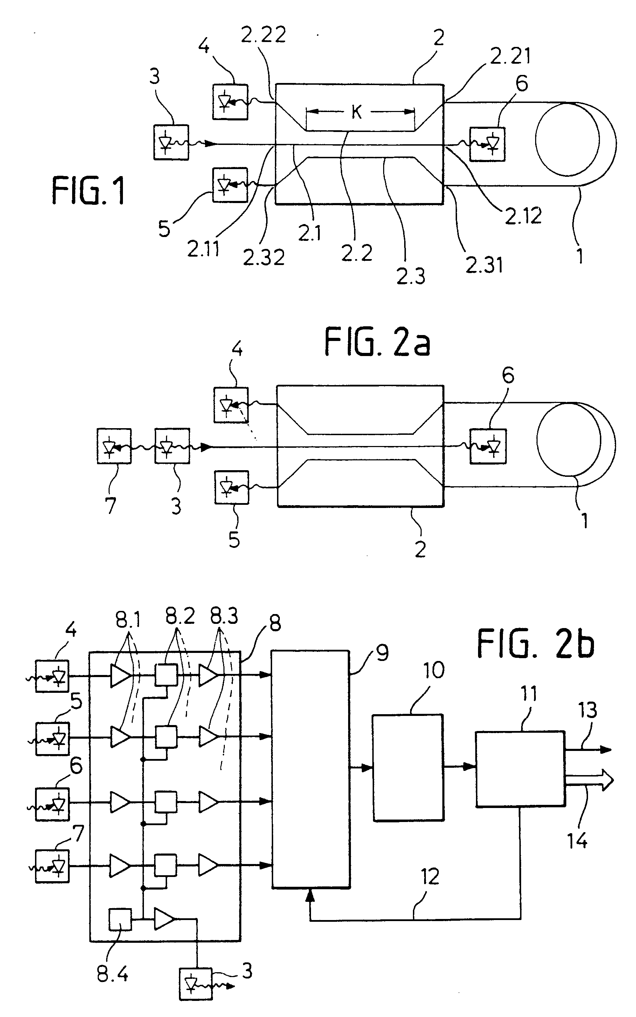

Bei dem in Fig. 1 dargestellten Ausführungsbeispiel sind die Enden einer Lichtleitfaserspule 1 mit zwei Ausgängen 2.21 und 2.31 eines $3 \times 3$-Kopplers 2 verbunden. Der Eingang 2.11 des $3 \times 3$-Kopplers wird von einer Leuchtdiode 3, z.B. einer Laserdiode, Kantenemitterdiode oder Superlumineszenzdiode, mit optischer Strahlung versorgt, welche über den Koppelbereich K auf die Lichtleiter 2.2 und 2.3 übertragen wird und über die Ausgänge 2.21 und 2.31 die Lichtleitfaserspule gegensinnig durchläuft. Die jeweils wieder in den $3 \times 3$-Koppler 2 einlaufende Strahlung interferiert dort miteinander wobei die Interferenzsignale an den Ausgängen 2.22 und 2.32 mittels Strahlungsdetektoren 4 und 5 empfangen werden. Die Intensitätsverläufe an den Ausgängen 2.22 und 2.32 sind abhängig von der auf die Lichtleitfaserspule 1 einwirkenden Drehgeschwindigkeit $\Omega$ und bei symmetrischem Aufbau des $3 \times 3$-Kopplers auch symmetrisch um die Achse $\Omega = 0$. Eine Drehung in einer Richtung bewirkt somit eine Zunahme der Intensität an einem der beiden Ausgänge 2.22 bzw. 2.32 und eine Abnahme am jeweils anderen. Drehrichtung und Drehgeschwindigkeit können somit aus den Signalen der Strahlungsempfänger 4 und 5 ermittelt werden.

An dem der Leuchtdiode 3 gegenüberliegenden Ende 2.12 des Lichtleiters 2.1 ist ein weiterer Strahlungsdetektor 6 angeordnet, der die verbleibende, nicht in die Lichtleitfaserspule übergekoppelte Strahlung aus dem Lichtleiter 2.1 empfängt. Dieser Anteil der Strahlung ist nicht abhängig von der Drehgeschwindigkeit, sondern wird ausschließlich durch die ursprüngliche Strahlungsintensität der Leuchtdiode 3 sowie durch die Eigenschaft des Kopplers 2 bestimmt.

Die Signalauswertung soll anhand des in Fig. 2a dargestellten Ausführungsbeispiels sowie des Blockschaltbilds gemäß Fig. 2b näher beschrieben werden. Der Faserkreisel gemäß Fig. 2a entspricht demjenigen aus Fig. 1 wobei jedoch die Leuchtdiode 3 mit einer Monitordiode 7 versehen ist. Auf diese Weise können Störeinflüsse, die durch Intensitätsschwankungen der Leuchtdiode 3 verursacht werden direkt von der Monitordiode 7 erfaßt und von denjenigen unterschieden werden, die durch den 3 × 3-Koppler 2 verursacht werden. Die Subtraktion der Signale der Monitordiode 7 von denjenigen des Strahlungsdetektors 6 liefert somit die durch den 3 × 3-Koppler 2 verursachten Störungen.

Die Signalauswertung einer Anordnung gemäß Fig. 2a geschieht mittels einer in Fig. 2b dargestellten Elektronik bei der die Strahlungsdetektoren 4, 5, 6 und 7 mit einem Lock-in-Verstärker 8 verbunden sind. Dort werden die einzelnen Signale über Vorverstärker 8.1 verstärkt und von den Demodulatoren 8.2 phasenrichtig demoduliert. Der Oszillator 8.4. liefert die Referenzfrequenz für die Modulation der Lichtquelle 3 und die Demodulatoren 8.2. Die mit einem Tiefpaß gefilterten Signale der Demodulatoren werden in den Verstärkern 8.3 auf einen entsprechenden Pegel verstärkt und der Impedanz des nachfolgenden Analogmultiplexers 9 angepaßt. Dieser multiplext die vier Ausgangssignale im Zeitbereich, gesteuert durch die Taktfrequenz 12 eines Mikroprozessors 11. Die Zeitmultiplex-Signale werden in einen A/D-Wandler 10 in digitale Signale umgewandelt, welche von dem Rechner 11 verarbeitet werden. Der Algorithmus des Rechners ermittelt die Sagnac-Phase $\phi_s$ aus den Inteferenzsignalen $S_4$ und $S_5$ der Fotodioden 4 und 5 entsprechend dem Zusammenhang

$$S_i = A_i + B_i \cos (\phi_s + C_i) \qquad i = 4,5$$

Die Abhängigkeit der Koeffizienten $A_i$, $B_i$, $C_i$ von der Lichtleistung des Senders 3 und den Koppeleigenschaften des 3 × 3-Kopplers und damit von den Signalen der Monitordioden 6 und 7 sind in einem Speicher des Rechners (z.B. EPROM) abgelegt. Mit Hilfe obiger Bezeichung wird von dem Rechner die Sagnac-Phase bzw. die daraus abgeleitete Drehrate des Sensors ermittelt und über einen seriellen 13 bzw. parallelen 14 Ausgang ausgegeben, eventuell mit zusätzlichen Informationen über Lichtleiter und Zustand des Kopplers.

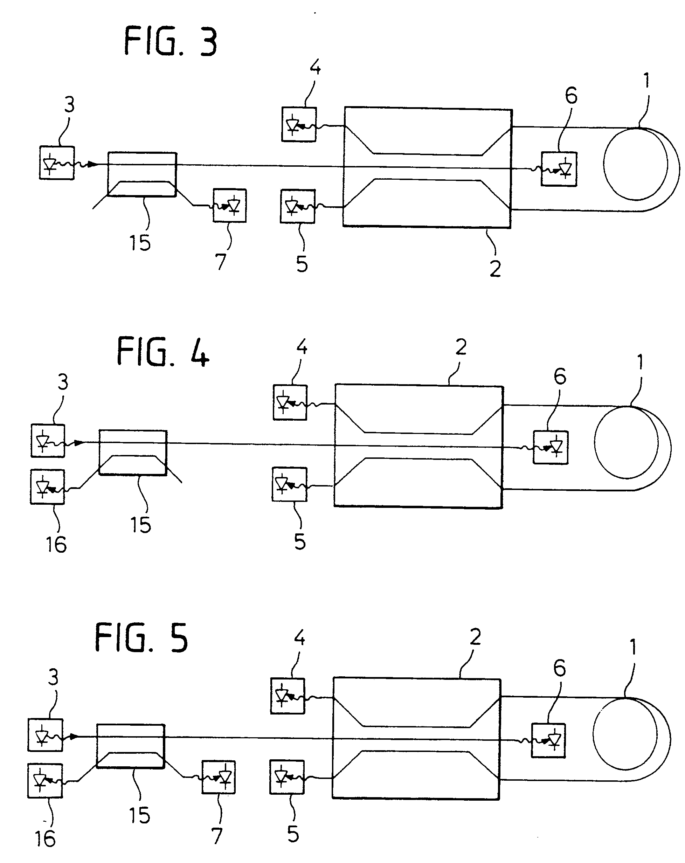

Bei dem in Fig. 3 dargestellten Ausführungsbeispiel ist die Monitordiode 7 über einen 2 × 2-Koppler an die die Leuchtdiode 3 und den 3 × 3-Koppler verbindenden Lichtleitfaser gekoppelt. Im übrigen entspricht diese Anordnung dem Faserkreisel gemäß Fig. 1.

Der in Fig. 4 dargestellte Faserkreisel entspricht denjenigen in Fig. 3 mit dem Unterschied, daß an dem 2 × 2-Koppler 15 ein Strahlungsdetektor 16 derart angeordnet ist, daß die aus dem 3 × 3-Koppler 2 in Richtung auf die Lichtquelle 3 zurücklaufende Strahlung ausgekoppelt und erfasst wird. In Verbindung mit den Signalen des Strahlungsdetektors 6 lassen sich somit Störungen aufgrund von Variationen der Koppellänge und der Koppelsymmetrie des 3 × 3-Kopplers 2 separieren.

Das Ausführungsbeispiel gemäß Fig. 5 entspricht einer Kombination der Ausführungsbeispiele von Fig. 3 und 4, d.h., an den Ausgängen des 2 × 2-Kopplers 15 befindet sich sowohl eine Monitordiode 7 die ein der Intensität der Lichtquelle 3 entsprechendes Signal empfängt sowie ein Strahlungsdetektor 16, der die vom 3 × 3-Koppler 2 zurückgestreute Strahlung empfängt. Mit dieser Anordnung lassen sich sämtliche Störeinflüsse der Lichtquelle 3 und des 3 × 3-Kopplers 2 erfassen und bei der Signalverarbeitung berücksichtigen.

## Patentansprüche

1. Faserkreisel vom Sagnac-Typ mit einer Lichtleitfaserspule sowie einem aus drei optisch gekoppelten Lichtleitern aufgebauten 3 × 3-Koppler, wobei ein erster Lichtleiter des 3 × 3-Kopplers mit einer optischen Strahlungsquelle und die beiden anderen Lichtleiter des 3 × 3-Kopplers an einem Ende mit je einem Ende der Lichtleitfaserspule und am anderen Ende mit je einem Strahlungsdetektor verbunden sind **dadurch gekennzeichnet,** daß der erste Lichtleiter (2.1) des 3 × 3-Kopplers (2) an dem der Strahlungsquelle (3) gegenüberliegenden Ende einen Strahlungsdetektor (6) aufweist.

2. Faserkreisel nach Anspruch 1 **dadurch gekennzeichnet,** daß die Strahlungsquelle (3) direkt und/oder indirekt mit mindestens einem weiteren Strahlungsdetektor (7, 16) verbunden ist.

3. Faserkreisel nach Anspruch 2 **dadurch gekennzeichnet,** daß der oder die Strahlungsdetektor(en) (7, 16) über mindestens einen 2 × 2-Koppler (15) mit dem ersten Lichtleiter (2.1) zwischen der Strahlungsquelle (3) und dem 3 × 3-Koppler (2) verbunden ist (sind).

## Claims

1. Fibre gyro of the Sagnac type, comprising an optical fibre coil and a 3 × 3 coupler composed of three optically coupled light conductors, in which a first light conducter of the 3 × 3 coupler is connected to an optical radiation source, and the other two light conductors of the 3 × 3 coupler are each connected at one end to a respective end of the optical fibre coil and at the other end to a respective radiation detector, characterised in that the first light conductor (2.1) of the 3 × 3 coupler (2) has a radiation detector (6) at the end opposite the radiation source (3).

2. Fibre gyro according to claim 1, characterised in that the radiation source (3) is connected directly and/or indirectly to at least one further radiation detector (7, 16).

3. Fibre gyro according to claim 2, characterised in that the radiation detector(s) (7, 16) is/are connected via at least one 2 × 2 coupler (15) to the first light conductor (2.1) between the radiation source (3) and the 3 × 3 coupler (2).

## Revendications

1. Gyromètre à fibre optique de type Sagnac comportant un enroulement de fibre optique ainsi qu'un coupleur-3 × 3 composé de trois fibres optiques couplées optiquement, une première fibre optique du coupleur-3 × 3 étant reliée à une source de rayonnements optiques et les deux autres fibres optiques du coupleur-3 × 3 étant reliées chacune par une extrémité à une extrémité de l'enroulement de fibres optiques et par l'autre extrémité à un détecteur de rayonnement respectif, **caractérisé** en ce que la première fibre optique (2.1) du coupleur-3 × 3 (2) est munie d'un détecteur de rayonnement (6) à son extrémité opposée à la source de rayonnement (3).

2. Gyromètre à fibre optique selon la revendication 1, **caractérisé** en ce que la source de rayonnement (3) est reliée directement et/ou indirectement à au moins un détecteur de rayonnement (7, 16) supplémentaire.

3. Gyromètre à fibre optique selon la revendication 2, **caractérisé** en ce que le ou les détecteur(s) de rayonnement (7, 16) est/sont relié(s) par l'intermédiaire d'au moins un coupleur-2 × 2 (15) à la première fibre optique (2.1) reliant la source de rayonnement (3) au coupleur-3 × 3 (2).

FIG.1

FIG. 2a

FIG. 2b

# FIG. 3

# FIG. 4

# FIG. 5